(19) **Europäisches Patentamt**

**European Patent Office**

**Office européen des brevets**

(11) **EP 1 209 549 A2**

(12) **EUROPEAN PATENT APPLICATION**

| | |
|---|---|
| (43) Date of publication:<br>**29.05.2002 Bulletin 2002/22** | (51) Int Cl.7: **G05F 1/56**, H02M 3/156 |

(21) Application number: **01127226.7**

(22) Date of filing: **16.11.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **20.11.2000 DE 10057439**

(71) Applicant: **Nokia Corporation
02150 Espoo (FI)**

(72) Inventor: **Fritz, Werner
89233 Neu-Ulm (DE)**

(74) Representative:
**TER MEER STEINMEISTER & PARTNER GbR
Patentanwälte,
Mauerkircherstrasse 45
81679 München (DE)**

(54) **Voltage controller for a pulsed load, in particular for a mobile-telephone or telematics transmitter**

(57)     The present invention relates to a voltage controller for a pulsed load, in particular for a mobile-telephone or telematics transmitter. In order to prevent phase errors and frequency errors resulting from these which arise when in the event of falling voltage the current for a pulsed load (14), in particular for a mobile-telephone or telematics transmitter transmitting in burst mode, is increased and in order to keep the power of the load (14), in particular the transmission power, constant the voltage controller (15) according to the invention comprises a control element (21) which is connected between an input connection (22) for the application of an input voltage (Vin) and an output connection (23) for supplying an output voltage (Vout) to a pulsed load (14), a comparison element (24) which compares an actual value signal (Vo) corresponding to the output voltage (Vout) with a desired value signal (Vref) and supplies a control signal (Vc) to the control element (21) in order to influence the output voltage (Vout) to the effect of adapting the actual value signal (Vo) to the desired value signal (Vref), and a desired value circuit (26) which derives the desired value signal (Vref) from the input voltage (Vin) in such a way that it is substantially constant over the duration of a load pulse.

Fig. 1

EP 1 209 549 A2

## Description

The invention relates to a voltage controller for a pulsed load, in particular for a mobile-telephone or telematics transmitter.

In mobile telephones and telematics systems the transmitter modules usually do not operate continuously but rather in pulsed manner. The transmitted signals thus consist of individual transmitted pulses or bursts. Such a transmission mode is employed in particular by the GSM (Global System for Mobile communication) standard and by the DCS and PCS systems (Digital Communication System and Personal Communication System). Since the transmitters or their final stages in such a pulsed transmission mode are controlled in such a way that they operate at constant transmission power it turns out that the current consumed by the transmitter increases when during a transmission pulse, that is during a burst, the supply voltage for the transmitter or its final stage drops. The readjustment of the transmission power requires a shift of operating point in the transmitter stage which results in a phase shift in the output signal. Such a phase error cumulates during the burst to an interfering frequency error.

In order to avoid such a phase and/or frequency error during a transmission burst or at least to keep it so small that it does not exceed permissible tolerance values, the transmitter supply voltage must be kept constant within a tolerance range during the burst.

In order to be able to adhere to these requirements on the constancy of the supply voltage, in known mobile telephones and telematics devices capacitor circuits are employed, which have capacitance values of a few 1,000 µF with corresponding dielectric strength, in order to prevent this drop in the supply voltage. These capacitor circuits must not only have high capacitance values but they must also have as low an internal resistance (equivalent series resistance) as possible. These demands on such capacitor circuits require a corresponding number of expensive capacitors having a corresponding requirement for space. Moreover, the relatively high number of capacitors adversely affects the mechanical and electrical reliability of the circuit.

In order to be able largely to do without such capacitor circuits it is already known to use a fixed voltage controller which provides the supply voltage for the transmitter or its final stage. A fixed voltage controller which should deliver a certain constant output voltage needs a supply voltage which itself is higher by at least the voltage drop on the fixed voltage controller than the required output voltage. In order to be able to provide the required constant output voltage even when there are voltage fluctuations at the input to the fixed voltage controller, the supply voltage to the fixed voltage controller is usually substantially higher than the output voltage delivered, which results, on the one hand, in a high power loss and, on the other hand, in considerable heat generation in the fixed voltage controller so that components of a size suitable for heat dissipation must be provided. In addition, if the input voltage is less than the minimum, control and hence keeping the output voltage constant is no longer possible.

Proceeding from this the aim underlying the invention is to provide a voltage controller for a pulsed load, in particular for a mobile-telephone or telematics transmitter, which with low power loss keeps the supply voltage of the load or of the transmitter constant during a load pulse or a transmission burst.

This task is solved by the voltage controller according to Claim 1. Advantageous developments and refinements of the invention are described in the subsidiary claims.

Thus, according to the invention for a voltage controller which possesses a control element, which is connected between an input connection for the application of an input voltage and an output connection for supplying an output voltage to a pulsed load, and a comparison element which compares an actual value signal corresponding to the output voltage with a desired value signal and supplies a control signal to the control element in order to influence the output voltage to the effect of adapting the actual value signal to the desired value signal, a desired value circuit is provided which derives the desired value signal from the input voltage of the voltage controller in such a way that the desired value signal is substantially constant over the duration of a load pulse. For this purpose it is usefully provided that the desired value circuit contains a hold-delay element which at its output supplies an output signal corresponding to the input voltage as the desired value signal.

Thus, according to the invention, from the input voltage applied to the input of the voltage controller a desired value signal is derived which does not correspond to the instantaneous input voltage but rather to an averaged input voltage corresponding to a time constant of the hold-delay element. If the supply voltage collapses during a burst the desired value signal at the output of the desired value circuit practically does not follow this voltage drop, at least during the time of the load pulse, but rather remains substantially constant so that the voltage provided by the voltage controller as the supply voltage for the pulsed load, that is for a mobile-telephone or telematics transmitter for example, can also be kept constant as long as the input voltage to the voltage controller does not fall below a certain minimum value.

Since the desired value signal follows slow changes in the input voltage and in particular changes in the mean value of the input voltage of the voltage controller the output voltage of the voltage controller, that is the supply voltage for the load or the transmitter, can be kept at a value which is always smaller by only so much than the mean input voltage that control of the output voltage to a constant value is possible. Thus, since the controlled output voltage follows the input voltage or its mean value in defined manner without being affected by temporary fluctuations, the power loss in the voltage controller according to the invention can be kept low over a large input voltage range.

In a practical development of the invention it is provided that a lowpass is used as the hold-delay element, the time constant of the lowpass being a multiple of the duration of a load pulse. At the same time the lowpass, which keeps the desired value signal at the output of the desired value circuit almost constant for the duration of a load pulse, has the advantage that it acts as an averaging device for the input voltage applied to the voltage controller and thus as a result brings about smoothing of the desired value signal. In this way the effect of rippling in the input voltage produced by other circuit elements can be filtered out.

In an alternative development of the invention it is provided that for the hold-delay element a sample-and-hold element is employed whose hold time corresponds at least to the duration of a load pulse. At the same time it is practical if a sampling command signal for the sample-and-hold element is derived from a load pulse control signal in such a way that the output signal of the sample-and-hold element corresponds to the input voltage applied shortly before a load pulse.

Since when a sample-and-hold element is used the desired value signal is held constant for the hold time in each case it is particularly advantageous for the desired value circuit to have as the smoothing element a lowpass whose output signal is sampled in order to form the desired value signal. By this means fluctuations in the supply voltage for the pulsed load due to rippling in the input signal of the voltage controller can be largely ruled out. At the same time the lowpass may have a relatively small time constant which suffices to filter out unwanted and interfering fluctuations in the input voltage. In particular when the input voltage of the voltage controller is held at a certain value with the aid of a switching controller, the time constant need only be sufficiently large that a certain degree of rippling brought about by the switching controller is eliminated since the required voltage is already substantially supplied by the switching controller, even when its input voltage is smaller than the required output voltage.

A practical development of the invention is distinguished in that the desired value circuit possesses a voltage divider on which the desired value signal can be tapped off. In doing this it is particularly useful for an actual value capture circuit to be provided also which has a voltage divider on which an actual value signal corresponding to the output voltage can be tapped off.

In order to ensure that the pulsed load, that is to say the final stage of a transmitter operating in burst mode for example, is not damaged or destroyed by an excessively high supply voltage it is provided in a particularly preferred exemplified embodiment of the invention that at the input to the desired value circuit a voltage limiting circuit is connected in order in this way to lay down a maximum value for the output voltage, that is for the supply voltage of the connected load or the transmitter.

By this means voltage peaks, which can occur, for example, in car telephones which draw their supply voltage directly from the on-board network of the vehicle, can be intercepted, that is to say without any interposed converter or the like.

A different development of the invention distinguishes itself in that connected to the desired value circuit is a reference voltage signal in order to lay down a minimum value for the desired value signal. By this means it is achieved that below a predetermined voltage level the voltage controller or its control element is fully gated so that in the case of low voltages the maximum possible power can be fed on to the pulsed load.

The invention is explained in more detail below with reference by way of example to exemplified embodiments illustrated in the drawing. This shows:

Figure 1 a schematic block diagram of a telephone or telematics module in a motor vehicle;

Figure 2 a simplified schematic block diagram of a voltage controller according to the invention according to a first exemplified embodiment; and

Figure 3 a simplified schematic block diagram of the voltage controller according to the invention according to a second exemplified embodiment.

In the different figures in the drawing, components corresponding to one another are provided with the same reference symbols.

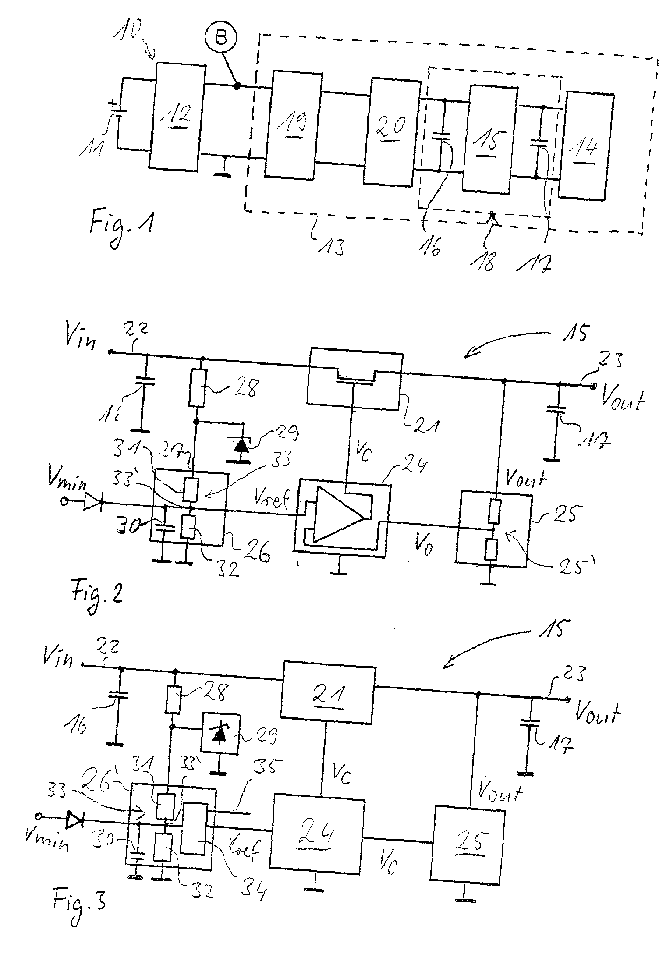

As schematically illustrated in Figure 1 a supply voltage source 10 in a motor vehicle or an on-board power supply B possesses a battery 11 and an impedance 12 composed of the internal resistance of the battery and the lead resistances and impedances. Connected to the supply voltage source 10 is a telephone or telematics module 13 which for the supply of voltage to a transmitter or the final stage of a transmitter 14 possesses a voltage controller 15 according to the invention which together with a buffer capacitor 16 at its input and a further capacitor 17 forms a voltage supply circuit 18.

In order to ensure the electromagnetic compatibility between the telephone or telematics module 13 and the surroundings an EMC (electromagnetic compatibility) filter 19 is further provided. In addition, between the EMC filter and the voltage supply circuit 18 a switching controller 20 can further be connected which carries out input control of the supply voltage. In particular when a telephone or telematics module 13 is used in a motor vehicle such a switching controller 20 for input control is useful since as a result of different load states in the on-board supply network the voltage provided by the supply voltage source 10 fluctuates, for example, between 8 V or less and 42 V. The switching controller 20 then supplies, for example, an average voltage of 12 V depending on the voltage drop on the voltage controller 15 and the input voltage required by the transmitter end stage 14.

As illustrated in Figure 2, the voltage controller 15 possesses a control element 21 which is connected between an input terminal 22 and an output terminal 23. The control element 21 can, as indicated in Figure 2, be a MOS field-effect transistor but it can also be formed by a bipolar transistor or an integrated semiconductor control circuit.

At the input terminal 22 for the buffer capacitor 16 an electrolytic capacitor, for example, is provided which traps voltage fluctuations in the on-board supply network and load fluctuations of a certain size. The relatively high internal resistance of an electrolytic capacitor or an arrangement of electrolytic capacitors is not critical in this case since a lowering of voltage caused by this internal resistance has no effect on the control of the output voltage of the voltage controller 15. The further capacitor 17 at the output terminal 23 of the voltage controller 15 must have only a low internal resistance but, on the other hand, need have no great capacitance so that, for example, so-called tantalum and ceramic capacitors can be provided as the further capacitor 17 or the further capacitor circuit.

For the control of the control element 21 a comparison element 24 is provided to which an actual value signal Vo corresponding to the output voltage Vout is fed by an actual value capture circuit 25. In this case the actual value capture circuit 25 is constructed for example as a voltage divider 25 in order to produce an actual value signal Vo which can be processed by conventional semiconductor components.

The comparison element 24 can have an operation amplifier (circuit) which is connected in such a way that its output signal represents in magnitude and sign the difference between the desired and actual value signal (Vref - Vo). In order to achieve that the formation of the desired value signal in the desired value circuit 26 is impaired as little as possible by the comparison element 24 a voltage follower can be connected in a manner not shown in more detail between the output of the desired value circuit 26 and the input of the comparison element 24. Furthermore, it is possible to provide a simple difference amplifier as the comparison element 24, it being possible for impedance matching to provide a voltage follower once again between the output of the difference amplifier and the control input of the control element 21. The control element 21, the comparison element 24 and the actual value capture circuit 25, which are illustrated here by way of example as single elements or components, can also be constructed as an integrated semiconductor circuit, eg as an ASIC (application-specific integrated circuit).

To generate a desired value signal Vref which is applied to a second input of the comparison element 24 a desired value circuit 26 is provided whose input 27 is connected via a resistance 28 to the input terminal 22 of the voltage controller 15. In order to limit the input voltage of the desired value circuit 26 and hence also the output voltage of the voltage controller 15 to a maximum value a Zener diode 29 is connected as a voltage limiting circuit between the input 27 of the desired value circuit 26 and earth. In order to achieve that the voltage controller 15 is gated in the event that the input voltage Vin of the voltage controller 15 falls below a predetermined value and in order in this case to supply the maximum possible voltage to the following load a voltage Vmin is applied to a tap 33' serving as output of the desired value circuit 26 so that the desired value signal Vref cannot become smaller than this voltage Vmin.

The desired value circuit 26 comprises a capacitor 30 which is connected to a central tap 33' of a voltage divider 33 formed by the resistor 28 and by a first resistor 31 and a second resistor 32 of the desired value circuit 26. At the same time the capacitor 30 together with the resistors 28, 31 and 32 forms a lowpass whose time constant is chosen in such a way that it is a multiple of the duration of a load pulse, that is to say the duration of a transmission burst.

As long as a substantially constant voltage, which may also have a certain level of ripple, is applied to the input terminal 22 of the voltage controller 15, the output voltage of the desired value circuit 26, which represents the desired value signal Vref, corresponds to the dc voltage component of the input voltage in the manner predetermined by the voltage divider 33, any level of ripple in the input signal being balanced out by the averaging action of the lowpass filter.

If a burst is sent out and as a result of this the input voltage at the input terminal 22 of the voltage controller 15 falls the output voltage of the desired value circuit 26, that is the desired value signal Vref, does not follow the fall in voltage but rather remains substantially constant for the duration of the burst since the fast voltage change is filtered out by the lowpass 30, 33. The comparison element 24 thus compares the actual value signal Vo with a desired value signal Vref which is substantially constant for the duration of a burst and supplies a control signal Vc which affects the output voltage Vout to the effect that the actual value signal Vo is matched to the desired value signal Vref and hence is kept constant.

The exemplified embodiment of the voltage controller 15 according to the invention illustrated in Figure 3 differs from the voltage controller 15 explained with reference to Figure 2 only in the structure of the desired value circuit 26' which in addition to the two resistors 31, 32 and the capacitor 30 has a sample-and-hold element 34 which is connected to the central tap 33' of the voltage divider 33 to which in turn the voltage Vmin is applied in order to bring about gating of the voltage controller 15 when the input voltage falls below a value which is below a predetermined minimum value for the voltage. A control signal input 35 of the sample-and-hold element 34 has a sampling signal applied to it whose period is at least the duration of a load pulse or a burst, but is preferably distinctly longer than this duration. Usefully, the sampling of the voltage value at the central tap of the voltage divider 33 ensues in each case shortly before a burst is sent out so that it is reliably ensured that the sampled and held voltage which is supplied as the desired value signal to the comparison element 24 is constant during the burst. Instead of or in addition to a periodic sampling it can be provided that the control signal for the burst transmission mode is used in order to derive a sampling control signal from this. At the same time it is also conceivable in particular that the sampling also takes place after a burst so that it is ensured that the lowest value of the input voltage is also captured. Furthermore, it can also be provided that sampling before a burst is combined with sampling after one.

In doing this the time constant of the lowpass formed from the voltage divider 33 and capacitor 30 can be chosen to be smaller than in the exemplified embodiment according'to Figure 2 since the sample-and-hold element 34 holds the desired value signal constant during a load pulse or burst while the lowpass need only eliminate fluctuation of the voltage.

The desired value circuit which can be built up of individual components or as an integrated circuit can also be implemented in a different way as long as it ensures that the desired value signal Vref derived from the input voltage of the voltage controller 15 is substantially constant during a load pulse. For example an integration element with appropriate connections can also be provided.

It is, furthermore, possible to employ lowpass elements having different time constants depending on whether the voltage applied falls or rises in order to achieve that the desired value signal Vref of a falling voltage follows only slowly but that of a rising voltage follows relatively quickly.

The use of a voltage controller 15 according to the invention in a telephone or telematics module makes it possible to reduce substantially the number of high-capacitance buffer capacitors needed by comparison with the state of the art. This makes the circuit more reliable since the mechanical fastening of high-capacitance capacitors, especially of electrolytic capacitors, is frequently susceptible to failure. The reduced number of capacitors results in a considerable reduction of the space required and also allows a reduction in weight.

The voltage controller 15 described allows the provision of a constant output voltage Vout which is proportional to the input voltage Vin or to its time-averaged value Vin.mean, so that the following equation holds:

$$Vout = k * Vin \text{ or } Vout = k * Vin.mean.$$

It is also conceivable, however, to design the comparison element 24 in such a way that the difference Vin - Vout or Vin.mean - Vout is kept constant. For this purpose it would be necessary, for example, that the comparison element determines the difference between the input voltage Vin, Vin.mean and the output voltage Vout and compares this with a desired value for this difference, while during a load pulse or burst the value captured for the input voltage is held so that in this case the output voltage is kept constant.

The present invention allows the use of a switching controller which does not have to be designed for the maximum load in the case of transmission but only for an average power.

Furthermore, with the aid of the voltage controller according to the invention which keeps the transmitter voltage constant during the burst phase errors and frequency errors in the transmitted signal can be prevented.

Moreover, by filtering higher-frequency interference on the input voltage Vin by means of the voltage controller 15 a reduction of what are known as spurious emissions is obtained.

A further advantage of the voltage controller according to the invention consists in that by means of a simple on-off signal which is fed to the comparison element 24 via a switching input not shown in more detail or by switching off Vref or the desired value circuit 26, 26' it is achieved that the control element 21 is disabled and the connection between the input and output terminals 22 and 23 is broken so that the entire circuit becomes current-free. In this way a separate switch for switching off the load or the transmitter can be saved.

**Claims**

1. Voltage controller for a pulsed load, in particular for a mobile-telephone or telematics transmitter having

   - a control element (21) which is connected between an input connection (22) for the application of an input voltage (Vin) and an output connection (23) for supplying an output voltage (Vout) to a pulsed load (14),
   - a comparison element (24) which compares an actual value signal (Vo) corresponding to the output voltage (Vout) with a desired value signal (Vref) and supplies a control signal (Vc) to the control element (21) in order to influence the output voltage (Vout) to the effect of adapting the actual value signal (Vo) to the desired value signal (Vref), and
   - a desired value circuit (26, 26') which derives the desired value signal (Vref) from the input voltage (Vin) in such a way that it is substantially constant over the duration of a load pulse.

2. Voltage controller according to Claim 1, **characterised in that** the desired value circuit (26, 26') contains a hold-delay element (30, 33; 34) which at its output supplies an output signal corresponding to the input voltage (Vin) as the desired value signal (Vref).

3. Voltage controller according to Claim 2, **characterised in that** a lowpass (30, 33) is provided as the hold-delay element.

4. Voltage controller according to Claim 3, **characterised in that** the time constant of the lowpass (30, 33) is a multiple of the duration of a load pulse.

5. Voltage controller according to Claim 2, **characterised in that** for the hold-delay element a sample-and-hold element (34) is provided whose hold time corresponds at least to the duration of a load pulse.

6. Voltage controller according to Claim 5, **characterised in that** a sampling command signal for the sample-and-hold element (34) is derived from a load pulse control signal in such a way that the output signal (Vref) of the sample-and-hold element (34) corresponds to the input voltage (Vin) applied shortly before a load pulse.

7. Voltage controller according to Claim 5 or 6, **characterised in that** the desired value circuit (26') has as smoothing element a lowpass (30, 33) whose output signal is sampled in order to construct the desired value signal (Vref).

8. Voltage controller according to one of the preceding claims, **characterised in that** the desired value circuit (26, 26') has a voltage divider (33) on which the desired value signal (Vref) can be tapped off.

9. Voltage controller according to one of the preceding claims, **characterised in that** an actual value capture circuit (25) is provided which has a voltage divider (25') on which an actual value signal (Vo) corresponding to the output voltage (Vout) can be tapped off.

10. Voltage controller according to one of the preceding claims, **characterised in that** a voltage limiting circuit (29) is connected to the input of the desired value circuit (26, 26') in order to fix a maximum value for the desired value signal (Vref).

11. Voltage controller according to one of the preceding claims, **characterised in that** a reference voltage signal (Vmin) is connected to the desired value circuit (26, 26') in order to fix a minimum value for the desired value signal (Vref).

Fig. 1

Fig. 2

Fig. 3